Europäisches Patentamt

European Patent Office

Office européen des brevets

(11) Publication number: **0 289 207 B1**

(12) **EUROPEAN PATENT SPECIFICATION**

(45) Date of publication of patent specification: **10.06.92** (51) Int. Cl.5: **G01N 29/00**

(21) Application number: **88303577.6**

(22) Date of filing: **20.04.88**

(54) **Contact ultrasonic transducer heads.**

(30) Priority: **28.04.87 US 43672**

(43) Date of publication of application:
**02.11.88 Bulletin 88/44**

(45) Publication of the grant of the patent:
**10.06.92 Bulletin 92/24**

(84) Designated Contracting States:
**BE CH DE ES FR GB LI SE**

(56) References cited:
**DE-A- 1 966 376**
**FR-A- 2 373 059**
**GB-A- 1 447 534**
**US-A- 3 950 660**
**US-A- 4 489 729**

**PATENT ABSTRACTS OF JAPAN, vol. 8, no. 286 (P-324)[1723], 27th December 1984; & JP-A-59 150 334**

**IDEM**

(73) Proprietor: **THE BABCOCK & WILCOX COMPANY**
**1010 Common Street, P.O. Box 60035**
**New Orleans, Louisiana 70160(US)**

(72) Inventor: **Fasnacht, Floyd A., Jr.**
**114 Londonberry Road**
**Forest Virginia 24551(US)**
Inventor: **Hacker, Michael G.**
**Route 1, Box 236**
**Rustburg Virginia 24588(US)**
Inventor: **Lindsey, Orville L.**
**209 Burr Oak Road**
**Lynchburg Virginia 24502(US)**
Inventor: **Smentek, Thomas J.**
**418 Otter View Road**
**Forest Virginia 24551(US)**

(74) Representative: **Cotter, Ivan John et al**
**D. YOUNG & CO. 10 Staple Inn**
**London WC1V 7RD(GB)**

EP 0 289 207 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to contact ultrasonic transducer heads.

Ultrasonic examination or inspection of work such as pressurised water reactor vessels is typically performed from the inside of the vessel. During such examinations, ultrasonic transducers are manipulated by a remotely operated apparatus to scan predetermined areas of the reactor vessel. The examination is accomplished by generating an ultrasonic sound wave which is acoustically coupled to the vessel being inspected. The sound wave travels through the material of the vessel at a rate determined by the acoustic velocity of the material.

The acoustic velocity is a product of the material's density and elasticity. Reflections or echoes of the sound wave occur whenever the velocity of the propagated sound wave is altered. The magnitude of the echo is related to the acoustic impedance of the reflecting material interface or, in the case of a flaw, its size and orientation in relation to the size and orientation of the transmitted sound wave. Two methods of coupling the transmitted sound wave from the transducer to the vessel under inspection are generally used. In one, known as the immersion method, the transducer is submersed in water and placed a set distance, generally several inches (1 inch = 25.4 mm), from the vessel wall. The sound waves are transmitted from the transducer, through the water, and into the vessel wall. Reflected sound waves are received by the transducer and electronically processed to determine the location of the reflection. A second method of inspection, known as the contact method, places the ultrasonic transducers in direct contact with the vessel under inspection. The sound is coupled to the vessel by a thin film of water. The transducer may be attached to a remotely operated manipulating system such as an automated reactor inspection system (ARIS) which controls the positioning of the transducer head inside the reactor vessel. As far as is known, previous applications of the contact method of inspection have involved the use of rigid plates specifically contoured for each geometric configuration examined in the vessel. A problem with this method is that several different plates would be required for a typical vessel inspection. Normally, the entire inspection tool must be removed from the vessel to change the inspection plate. Removal of the inspection tool to change the inspection plate is impractical as such examinations are usually critical path.

Ultrasound systems of which the inventors are aware include the following.

US Patent No. US-A-4 489 729 entitled "Ultrasound Imaging System" is aimed at general applications for the medical field and discloses the use of a plurality of transducers, range signal means, timing means, energising means for the transducers, means for listening for an ultrasonic wave, means for selecting a sequence of firing transducers, and means for producing an output representative of the received ultrasound signals.

US-A-4 210 028 entitled "Method and Apparatus for Ultrasonically Measuring Concentrations of Stress" is aimed at vessel inspections and discloses an ultrasonic transducer array, means for measuring the time of flight of the acoustic waves within the object of interest, and means for determining from the time of flight measurements any variations in the acoustic velocity of the acoustic waves within the object of interest.

US-A-4 096 755 entitled "Ultrasonic Inspection Apparatus" is aimed at inspection of aircraft fuselage components and discloses a carriage movable over a surface to be ultrasonically inspected, alternate transmitting and receiving ultrasonic transducers mounted on the carriage, means for causing each of the transmitting transducers to generate a burst of sound in the surface, separate detectors for each of the receiving transducers for detecting a shift in phase in the sound received by its associated receiving transducer due to a defect in the surface and for momentarily indicating a shift in phase indicative of a defect, a single master indicator for all transducers, and means for actuating the master indicator.

US-A-4 252 022 entitled "Detection, Characterization and Studying of Flaws in Work by Acoustic Imaging" relates to acoustical holography and discloses a method of studying flaws in work having an irregular surface comprising generating and focussing acoustic energy on or near the irregular surface, scanning the surface with the focussed acoustic energy, receiving resulting acoustic energy from echoes from flaws, and controlling the reception to reduce the effects of differences in the irregular surface.

US-A-4523468 entitled "Phased Array Inspection of Cylindrical Objects" is aimed at pipe inspection and discloses a method of ultrasonically locating defects in an object with first and second transducer arrays comprising actuating at least one transducer of each array and causing the remaining transducers to assume a reflected receiving mode, measuring an ultrasonic wave travel time between transmission and receipt, determining the spatial relationship between the transmitting and receiving transducer, and determining the location of the defect from the measured travel time and relative spatial relationship of the transducers.

US-A-4604897 entitled "Multitransducer Ultrasonic Transducer With Transducers of Different Sizes" discloses the use of probes of different sizes and control means for selectively activating successive groups of transducers.

US-A-4582065 entitled "Ultrasonic Step Scanning Utilizing Unequally Spaced Curvilinear Transducer Array" discloses an assembly for use in a medical diagnostic system comprising a plurality of individual ultrasonic transducer elements and a mounting structure defining a curved array face for disposing the transducer elements in a convex curvilinear array.

GB 1,447,534 entitled "Ultrasonic Test Head" discloses an ultrasonic test head for use in nondestructive testing of articles. The test head includes a transducer fixed to a holder slidably mounted in a housing and biased outwardly by a spring.

The known art does not address the problem of variations in the water path distance in immersion testing. The use of several contact heads shaped to match the contour of the portion of the vessel under examination, a time consuming and impractical process, is also not addressed in the area of contact testing.

US-A-4,166,395 entitled "Testhead Holder in a Test System Carrier, Preferably for Ultrasonic Test Heads" discloses an ultrasonic testhead system for testing reactor pressure vessels in nuclear power plants. Each Test Head is mounted on a gimbal support to allow rotation about 2 perpendicular axes. Each testhead is connected via a piston and cylinder to a compressed air supply and it is possible to lift off and press down a test head against a surface individually, without affecting the other test heads.

According to the present invention there is provided a contact ultrasonic transducer head assembly comprising:

a stationary housing;

a movable assembly slidably attached to the stationary housing;

a transducer mounting plate attached to the movable assembly;

an array of transducers mounted in the transducer mounting plate;

a transducer suspension system attached to the transducer mounting plate and the transducers, in which system each of the transducers is independently supported so that a tranducer mounted in the middle of the array or at a corner of the array is mounted on a holder that allows rotation about two axes, and a transducer mounted on an edge of the array is mounted on a holder that allows rotation about one axis.

A preferred embodiment of the invention described in detail hereinbelow at least partially solves the aforementioned problem in a straightforward manner. It comprises a contact head assembly which holds a plurality of transducers to be placed in direct contact with work under inspection.

The head assembly is mounted in use on a remotely operated tool capable of manipulating the head throughout the work to be inspected, which may be a reactor vessel. Each transducer is fitted into an individual transducer holder and is mounted on an independent suspension system capable of contouring to irregular surfaces as well as conforming to surface contours ranging from flat to, for example, a 330 mm (13 inch) radius. The transducers are contained in a larger transducer holder which is mounted on a movable assembly. The movable assembly is slidably mounted to a stationary housing which is mounted on a remotely operated tool. This movability gives the contact head the ability to stay in contact with the vessel wall during inspection, regardless of minor geometric variations in the vessel. The movable assembly is provided with wear pads which support the load of the movable assembly against the reactor vessel wall. This allows the suspension system of the transducers to function independently and minimise wear on the transducers. The preferred contact head assembly has the ability to carry all transducers required to do a full reactor vessel inspection.

The invention will now be further described, by way of illustrative example, with reference to the accompanying drawings, in which like parts are indicated by like reference numerals throughout, and in which:

Figure 1 illustrates a contact head assembly, according to a preferred embodiment of the invention, mounted on an ARIS manipulator;

Figure 2 is a side sectional view of the contact head assembly;

Figure 3 is another side sectional view of the contact head assembly rotated 45 degrees from the view of Figure 2 and taken along lines 3-3 in Figure 4; and

Figure 4 is a straight on view of a transducer array of the contact head assembly.

The drawings show a contact ultrasonic transducer head assembly 10 that comprises a stationary housing 12 and a movable assembly 14.

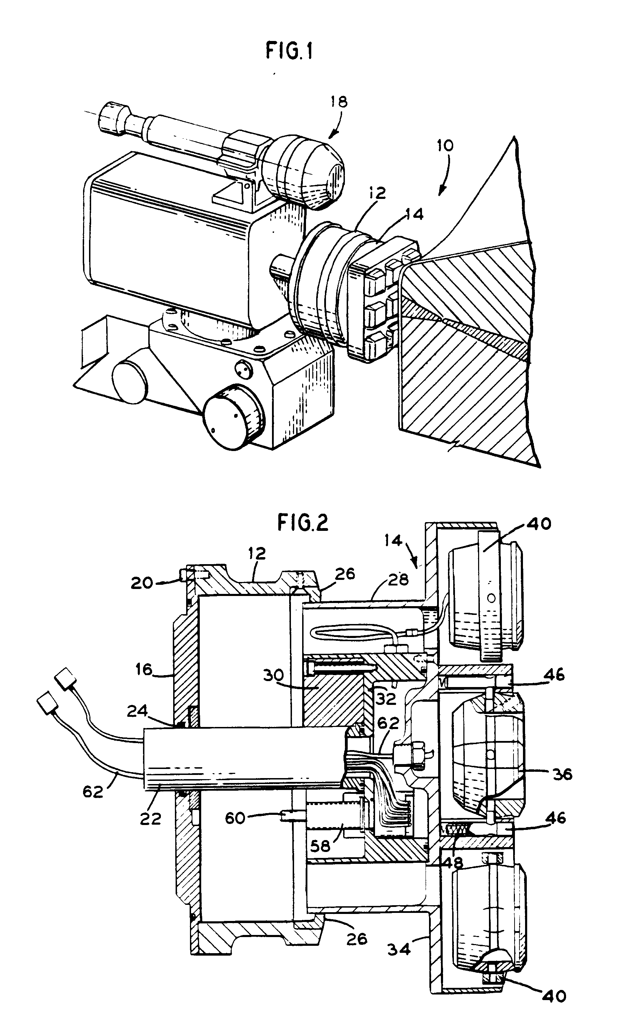

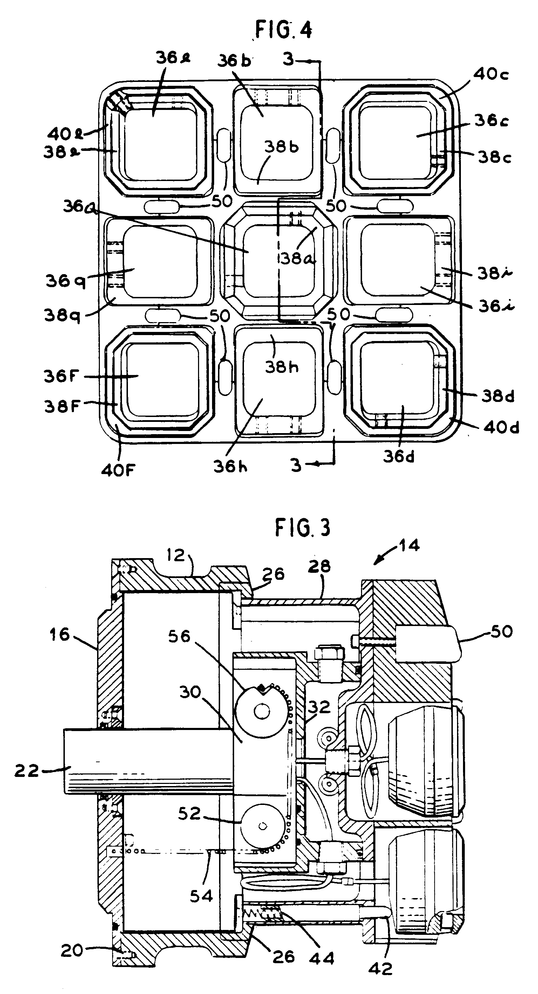

The stationary housing 12, best seen in Figures 1 and 2, is designed to be connected to a remotely operated tool by providing a mounting plate 16 at the rear thereof. In this preferred embodiment, the mounting plate 16 is designed to be mounted to a manipulator such as an ARIS II or III manipulator 18 shown in Figure 1. However, it should be understood that the mounting plate 16 may be designed to fit any other suitable manipulator. As shown in Figure 1, the stationary housing 12 is cylindrical, and it is attached to the mounting plate 16 by any conventional means such as screws 20. The mounting plate 16 is arranged slidably to receive a tubular shaft 22 through which electrical connections to the movable assembly 14 are run. Sealing means such as an O-ring 24 may be used to prevent fluid leakage between the mounting plate 16 and the shaft 22. The transducer head assembly 10 may be mounted on the ARIS manipulator 18 by extending the shaft 22 into the manipulator and terminating it at a control system therein (not shown) where all electrical connections are made. With this direct connection to the control system, the transducer head assembly 10 may be rotated through 360 degrees by the manipulator to maintain proper alignment for complex vessel geometries. As shown in Figures 2 and 3, the stationary housing 12 is provided with a flange 26 around its forward internal edge which serves as a means for retaining the movable assembly 14 within the stationary housing 12.

The movable assembly 14, as shown in Figures 2 and 3, has a main body portion thereof 28 sized to be slidably received within the stationary housing 12, and is cylindrical in shape. The tubular shaft 22 extends through a rear plate 30 and provides a path for electrical connections from the ARIS manipulator 18 into the transducer head assembly 10. The tubular shaft 22 terminates inside of the movable assembly 14 and may be attached to an interior plate 32 or formed integrally therewith. A transducer mounting plate 34 may be integral with the interior plate 32 or attached thereto by any suitable means such as screws. In this preferred embodiment, the transducer mounting plate 34 is arranged to receive nine separate transducers 36. As shown in Figure 4, the transducers 36 are preferably arranged in a 3 x 3 array. Each transducers 36 is fitted into an individual transducer holder 38. The four corner transducer holders 38 c, d, e, f are each mounted in corner transducer gimbals 40 c, d, e, f that allow the corner transducers 38 c, d, e, f to rotate on two separate axes independently of each other. Each corner transducer gimbal 40 c, d, e, f is held in place by two pistons (not shown) at a right angle to the gimbal to provide one of the rotational directions to the transducer. Each piston is loaded with a compression spring to allow movement of the transducer between a first normal flat position thereof and a second rotated position in response to movement across uneven surfaces. Side transducers 36 b, g, h, i are mounted in side transducer holders 38 b, g, h, i respectively that allow the respective side transducers to rotate on one axis. Each side transducer holder 38 b, g, h, i is held in place by two pistons which are spaced apart substantially 180 degrees around the transducer holder. Each piston is loaded with a compression spring to allow movement of the transducer between a first normal flat position and a second rotated position during movement across uneven surfaces. In addition, a plunger 42, seen in Figure 3, is used to provide additional load distribution on each of the side transducers 36 b, g, h, i. Each plunger 42 is biased towards its respective transducer by a spring 44. The centre transducer 36a is mounted in a centre transducer holder 38a which is held in place by four pistons, one located at each corner of the transducer holder 38a. Each piston is loaded with a compression spring to allow movement of the centre transducer 36a between a first flat position and a second rotated position during movement across an uneven surface. This provides for rotation on two separate axes. Although each separate suspension system is not fully illustrated, pistons 46 and spring 48 are illustrative of the general arrangement of the transducer suspension system described above.

The transducer mounting plate 34 is provided with means for allowing the suspension system of the transducers to function independently of manipulator pressure on the surface being inspected and minimising transducer wear. As shown in Figures 3 and 4, a plurality of wear pads 50, eight in this preferred embodiment, are attached to the transducer mounting plate 34 by any conventional means such as screws. The wear pads 50 extend forwardly of the transducer mounting plate 34 slightly less than the transducers 36 to allow contact of the transducers with the surface being inspected while the wear pads 50 continue to support the load of the transducer head assembly 10.

The transducer head assembly is provided with means for monitoring the extent of telescopic travel of the movable assembly 14 within the stationary housing 12. As shown in Figures 3, a position encoder 52 is mounted in the movable assembly 14. A chain 54 is anchored at a first end thereof on the mounting plate 16, engaged on a sprocket on the position encoder 52, and anchored at its second end to a take-up sprocket 56 which is spring loaded. The take-up sprocket 56 keeps the chain 54 in tension so that any movement of the movable assembly 14 within the stationary housing 12 is detected by the encoder 52 and relayed to an indicating means.

Means for electrically disabling the manipulator to prevent damage to the transducer head assembly 10 or to the surface being inspected as a result of excess pressure against the surface being inspected is also provided in the form of a limit switch 58. The limit switch 58 is mounted in the movable assembly 14 and has a plunger 60 which extends towards the mounting plate 16. When the movable assembly 14 slides completely into the stationary housing 12, the plunger 60 contacts the mounting plate 16 and is forced into the limit switch 58, which electrically disables the manipulator 18 to prevent it from exerting excess pressure against the surface being inspected. Sliding of the movable assembly 14 forwardly within the stationary housing 12 may be accomplished by the use of pressurised air or hydraulic fluid supplied from the manipulator 18. As shown in Figures 2 and 3, electrical connections to and from the transducers 36, the position encoder 52 and the limit switch 58 are provided by a wiring harness 62 which extends through the tubular shaft 22 into the manipulator 18.

In the preferred embodiment, the mounting plate 16 has the tubular shaft 22 extending therethrough for mounting on an ARIS II or III manipulator. However, the mounting plate and tubular shaft may be designed to be mounted on any other suitable manipulator. It is also pointed out that the transducer mounting arrangement allows for interchangeability of transducers and provide for a minimum of a twenty-five percent scan overlap for each transducer.

## Claims

1. A contact ultrasonic transducer head assembly (10) comprising:
    a stationary housing (12);
    a movable assembly (14) slidably attached to the stationary housing;
    a transducer mounting plate (34) attached to the movable assembly (14);
    an array of transducers (36) mounted in the transducer mounting plate (34); a transducer suspension system attached to the transducer mounting plate (34) and the transducers (36), in which system each of the transducers is independently supported so that a tranducer mounted in the middle of the array or at a corner of the array is mounted on a holder that allows rotation about two axes, and a transducer mounted on an edge of the array is mounted on a holder that allows rotation about one axis.

2. An assembly according to claim 1 comprising wear pads (50) mounted in the transducer mounting plate (34).

3. An assembly according to claim 1 or claim 2, comprising a limit switch (58) mounted in the movable assembly (14).

4. An assembly according to any one of the preceding claims, comprising means for monitoring the extent of travel of the movable assembly (14) within the stationary housing (12).

5. An assembly according to claim 4, wherein the means for monitoring travel comprises a position encoder (52).

## Revendications

1. Ensemble de têtes de transducteurs ultrasonores de contact (10) comprenant :
    un carter fixe (12) ;
    un ensemble mobile (14) fixé, de manière à pouvoir coulisser, au carter fixe ;
    une plaque de montage de transducteurs (34) fixé à l'ensemble mobile (14) ;
    un réseau de transducteurs (36) monté dans la plaque de montage de transducteurs (34) ; un système de suspension de transducteur fixé à la plaque de montage de transducteurs (34) et aux transducteurs (36), dans lequel système chacun des transducteurs est supporté indépendamment de sorte qu'un transducteur monté dans le milieu du réseau ou dans un angle du réseau est monté sur un support qui permet la rotation autour de deux axes, et qu'un transducteur monté sur un côté du réseau est monté sur un support qui permet la rotation autour d'un seul axe.

2. Ensemble selon la revendication 1 comprenant des patins d'usure (50) montés dans la plaque de montage de transducteurs (34).

3. Ensemble selon la revendication 1 ou la revendication 2 comprenant un contacteur de fin de course (58) monté dans l'ensemble mobile (14).

4. Ensemble selon l'une quelconque des revendications précédentes, comprenant des moyens pour piloter l'étendue de la course de l'ensemble mobile (14) dans le carter fixe (12).

5. Ensemble selon la revendication 4, dans lequel les moyens pour piloter la course comprennent un codeur de position (52).

## Patentansprüche

1. Kopfaufbau (10) für Kontaktultraschallwandler mit:
    einem stationären Gehäuse (12),
    einem bewegbaren Aufbau (14), der gleitbar an dem stationären Gehäuse angebracht ist,
    einer Befestigungsplatte (34) für Wandler, welche an dem bewegbaren Aufbau (14) angebracht sind,
    einem Wandlerfeld (36), welches in der Befestigungsplatte (34) für Wandler montiert ist, einem Aufhängsystem für die Wandler, welches an der Befestigungsplatte (34) für die Wandler und an den Wandlern (36) angebracht ist, wobei in diesem System jeder der Wandler unabhängig gehaltert ist, so daß ein Wandler, der in der Mitte des Feldes oder in einer Ecke des Feldes montiert ist, an einem Halter befestigt ist, der eine Drehung um zwei Achsen erlaubt und daß ein Wandler, der an einer Kante des Feldes montiert ist, an einem Halter befestigt ist, der eine Drehung um eine Achse erlaubt.

2. Aufbau nach Anspruch 1, welcher Verschleißpolster (50) aufweist, die in der Befestigungsplatte (34) für die Ultraschallwandler montiert sind.

3. Aufbau nach Anspruch 1 oder 2 mit einem Begrenzungsschalter (58), der in dem bewegbaren Aufbau (14) montiert ist.

4. Aufbau nach einem der vorstehenden Ansprüche, welcher eine Einrichtung zum Überwachen des Ausmaßes der Bewegung des beweglichen Aufbaues (14) innerhalb des Gehäuses (12) aufweist.

5. Aufbau nach Anspruch 4, wobei die Einrichtung zum Überwachen der Bewegung einen Positionscodierer aufweist.

EP 0 289 207 B1

FIG.1

18

10

12

14

FIG.2

12

40

20

26

28

14

16

30

32

46

24

62

36

62

22

60

58

62

46

48

26

34

40

7

FIG. 4

FIG. 3